# EUROPÄISCHE PATENTSCHRIFT

(11) **EP 2 801 515 B1**
(45) Veröffentlichungstag und Bekanntmachung des Hinweises auf die Patenterteilung: **22.02.2017**
(21) Anmeldenummer: 14158470.6
(22) Anmeldetag: 10.03.2014
(51) Int. Cl.: B62M 6/50

(54) **Fahrrad mit Einrichtung zur Verbesserung des runden Tritts**
Bicycle with a device for improving smooth pedalling
Vélo comprenant un dispositif d'amélioration du pédalage

(30) Priorität: 08.05.2013 DE 102013208575
(43) Veröffentlichungstag der Anmeldung: 12.11.2014
(73) Patentinhaber: ROBERT BOSCH GMBH, 70442 Stuttgart (DE)
(72) Erfinder: Schroeder, Gernot, 71636 Ludwigsburg (DE); Mazzola, Markus, 76131 Karlsruhe (DE); Moeser, Nicolas, 53121 Bonn (DE); Schaaf, Gunther, 70806 Kornwestheim (DE); Haug, Matthias, 74385 Pleidelsheim (DE); Schumacher, Jan, 71636 Ludwigsburg (DE)

(56) Entgegenhaltungen:
- WO-A1-2009/083787
- WO-A1-2011/072942
- JP-A- 2004 350 355
- US-A1- 2003 047 369

## Beschreibung

### Stand der Technik

Die vorliegende Erfindung betrifft ein Fahrrad, insbesondere ein Elektrofahrrad, mit einer Einrichtung zur Verbesserung des runden Tritts.

Beim Radfahren wird unter dem sogenannten runden Tritt eine Tritttechnik verstanden, bei der eine optimale Kraftübertragung der von einem Fahrer aufgebrachten Kräfte auf einen Kurbeltrieb vorhanden ist. Grundsätzlich verläuft eine Pedalbewegung beim Radfahren auf einer Kreisbahn. Die an Kurbeln befestigten Pedale können dabei in einem Winkel zwischen 0° und 360° angeordnet sein. Die sich auf den Pedalen befindlichen Füße übertragen dabei Kräfte eines Radfahrers auf den Kurbeltrieb. Hierbei werden grundsätzlich zwei Kräfte, nämlich eine Tangentialkraft senkrecht zur Kurbel und eine Radialkraft, erzeugt. Hierbei ist nur die tangentiale Kraftkomponente vortriebswirksam und die radiale Kraftkomponente führt zu einer Verlustkraft in der Kurbel bzw. im Kurbellager. Der runde Tritt wäre eine Tritttechnik, bei der der Fahrer ausschließlich tangentiale Kräfte an der Kurbel aufbringen könnte. Hierzu muss der Fahrer, ausgehend vom oberen Totpunkt der Kurbel, die Pedale herunterdrücken und nach Überschreiten des 180°-Winkels das Pedal wieder hochziehen. Somit können die vom Fahrer aufgebrachten Kräfte an den Pedalen umso wirkungsvoller für einen Vortrieb sorgen, je näher sich der Fahrer an die in jeder Kurbelstellung optimale Krafteinbringung in tangentialer Weise annähert. In der Praxis zeigt sich jedoch, dass der runde Tritt zu 100% nicht erreichbar ist. Es wäre allerdings wünschenswert, wenn ein Fahrer seine Tritttechnik verbessern könnte, um aus den vorhandenen Kraftreserven mehr Vortriebskraft zu erzeugen.

Der nächstliegende bekanntgewordene Stand der Technik ist dem Dokument WO2009/083787 zu entnehmen.

### Offenbarung der Erfindung

Das erfindungsgemäße Fahrrad mit den Merkmalen des Anspruchs 1 weist demgegenüber den Vorteil auf, dass ein Fahrer eine Hilfestellung erhält, wie er sich einem runden Tritt annähern kann. Dies wird erfindungsgemäß dadurch erreicht, dass das Fahrrad einen Kurbeltrieb mit zwei Kurbeln und zwei Pedalen, wenigstens einen Kraftsensor zur Bestimmung einer Tretkraft des Fahrers und wenigstens einen Kurbelsensor zur Bestimmung einer Kurbelstellung der Kurbel aufweist. Ferner ist eine Ausgabeeinrichtung zum Ausgeben von Information vorgesehen, insbesondere eine optische Anzeigeeinrichtung, sowie eine Steuereinheit. Die Steuereinheit ist mit dem Kraftsensor, dem Kurbelsensor und der Ausgabeeinrichtung verbunden. Dabei ist die Steuereinheit eingerichtet, basierend auf den erfassten Werten des Kraftsensors und des Kurbelsensors, eine Hilfestellung für den Fahrer zur Verbesserung eines Tretvorgangs auszugeben. Die Hilfestellung soll dabei eine Tritttechnik des Fahrers derart verbessern, dass sich die Tritttechnik so nahe wie möglich dem runden Tritt annähert. Erfindungsgemäß kann dabei die Hilfestellung bei allen Fahrradfahrten ermöglicht werden.

Die Unteransprüche zeigen bevorzugte Weiterbildungen der Erfindung.

Vorzugsweise ist der Kraftsensor am Pedal des Kurbeltriebs angeordnet und besonders bevorzugt umfasst das Fahrrad einen ersten Kraftsensor am ersten Pedal und einen zweiten Kraftsensor am zweiten Pedal.

Weiter bevorzugt ist der Kurbelsensor an einer Kurbel des Kurbeltriebs angeordnet und besonders bevorzugt umfasst das Fahrrad einen ersten Kurbelsensor an der ersten Kurbel und einen zweiten Kurbelsensor an der zweiten Kurbel.

Durch die Redundanz der Sensoren kann insbesondere eine besonders sichere und genaue Erfassung von Krafteintrag und Kurbelstellung erfasst werden.

Besonders bevorzugt umfasst das Fahrrad einen Elektromotor als zusätzlichen Antrieb, wobei der Elektromotor ebenfalls mit der Steuereinheit verbunden ist und eingerichtet ist, ein zusätzliches Drehmoment auf den Kurbeltrieb auszuüben. Die Steuereinrichtung steuert den Elektromotor dabei derart an, dass der Elektromotor während eines Tretvorgangs durch den Fahrer ein zusätzliches Drehmoment auf den Kurbeltrieb abgibt, um einen runden Tritt zu erreichen oder sich einem runden Tritt anzunähern. Besonders bevorzugt vergleicht die Steuereinheit dabei eine aktuelle Abweichung vom runden Tritt mit vorgegebenen, gespeicherten Werten und bei Überschreiten des vorgegebenen Werts steuert die Steuereinheit den Elektromotor an, um das zusätzliche Drehmoment zur Annäherung an den runden Tritt abzugeben. Weiter bevorzugt zeigt die Steuereinheit an der Ausgabeeinrichtung dem Fahrer dabei an, in welchem Umfang der Elektromotor ein zusätzliches Drehmoment abgibt und/oder wie der Fahrer sein Tretverhalten ändern sollte, um sich dem runden Tritt anzunähern.

Besonders bevorzugt ist der Elektromotor dabei am Kurbeltrieb angeordnet.

Weiter bevorzugt umfasst das Fahrrad ferner einen Neigungssensor, um eine Seitenneigung des Fahrrads zu erfassen. Der Neigungssensor ist dabei mit der Steuereinheit verbunden und die Steuereinheit gibt vorzugsweise bei Überschreiten einer vorbestimmten Seitenneigung eine Warnung aus. Die Warnung kann beispielsweise akustisch und/oder optisch erfolgen. Wenn das Fahrrad einen Elektromotor als zusätzlichen Antrieb aufweist, kann weiter bevorzugt die Steuereinrichtung eingerichtet sein, eine Stellung der Kurbel bei Gefahr eines Aufsetzens mittels des elektrischen Antriebs zu verändern. Dadurch kann bei Vorhandensein einer Seitenneigung ein Aufsetzen des Pedals am Boden verhindert werden.

Weiter bevorzugt wird eine Stellung der Kurbeln an einer Anzeigeeinheit angezeigt. Hierdurch hat der Fahrer die Kurbelstellung immer sofort im Blick. Weiter bevorzugt ist eine Grundstellung, z.B. eine horizontale Positionierung der Kurbeln, vorgegeben und der elektrische Antrieb stellt die Kurbeln immer in die Grundstellung, wenn der Fahrer nicht pedaliert. Alternativ kann statt des Motoreingriffs die Grundstellung und die aktuelle Stellung der Kurbeln an der Anzeigeeinheit angezeigt werden und dem Fahrer somit Vorschläge gemacht werden, welche Grundstellung für die aktuelle Fahrsituation optimal ist. Hierdurch können vorzugsweise auch Werte des Neigungssensors hinzugenommen werden, um bei Kurvenfahrten ein Aufsetzen der Pedale zu vermeiden.

Ferner betrifft die vorliegende Erfindung ein Verfahren zur Verbesserung einer Tritttechnik eines Fahrers eines Fahrrads mit den Schritten des Bestimmens einer Tretkraft des Fahrers auf wenigstens ein Pedal, des Bestimmens einer Kurbelstellung einer ersten und/oder zweiten Kurbel eines Kurbeltriebs und des Ausgebens einer Hilfestellung zum Dosieren der Tretkraft, um die Tritttechnik des Fahrers an einen runden Tritt anzunähern. Die Hilfestellung kann beispielsweise akustisch und/oder optisch auf einer Anzeigeeinrichtung ausgegeben werden. Beispielsweise kann auf der Anzeigeeinrichtung ein Pfeil oder dergleichen mit einer Kennzeichnung einer aktuellen Pedalposition ausgegeben werden, um dem Fahrer zu verdeutlichen, an welcher Position des 360°-Tretvorgangs er anders treten soll. Die Richtung des Pfeils gibt dabei die Richtung an, in welcher der Fahrer die Tretkraft auf das Pedal abgeben soll.

Besonders bevorzugt wird das erfindungsgemäße Verfahren durch einen Elektromotor unterstützt, wobei der Elektromotor mit dem Kurbeltrieb verbunden ist und, basierend auf den von der Steuereinheit erfassten Werten der Tretkraft und der Kurbelstellung, zusätzlich ein Drehmoment auf den Kurbeltrieb ausübt, um sich dem runden Tritt in Verbindung mit der Tretkraft des Fahrers möglichst anzunähern. Weiter bevorzugt erfasst das erfindungsgemäße Verfahren zusätzlich noch eine Seitenneigung des Fahrrads und gibt eine Warnung aus, wenn eine vorbestimmte Seitenneigung überschritten ist und/oder gibt an den Elektromotor einen Befehl aus, eine Stellung der Kurbeln zu verändern, so dass trotz Seitenneigung kein Aufsetzen der Pedale auf dem Boden erfolgt.

Wie aus der vorhergehenden Beschreibung ersichtlich ist, ist die vorliegende Erfindung insbesondere in Verbindung mit Elektrofahrrädern sehr geeignet. Erfindungsgemäß kann einem Fahrer hierbei in allen Fahrsituationen eine Hilfestellung gegeben werden, wie er sich dem runden Tritt möglichst nahe annähert.

Besonders bevorzugt wird bei der Hilfestellung auch zwischen dem ersten und zweiten Pedal unterschieden, da häufig eine Tretkraft und Krafteinleitungsrichtung eines linken Beines unterschiedlich von einer Tretkraft, und Krafteinleitungsrichtung eines rechten Beines ist.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Elektrofahrrads gemäß einem Ausführungsbeispiel der Erfindung,
- Figur 2: eine schematische Darstellung eines Kurbeltriebs samt Steuereinheit des Elektrofahrrads von Figur 1,
- Figur 3: eine erläuternde Darstellung des runden Tritts sowie einer Anzeige auf einer Ausgabeeinrichtung,
- Figur 4: eine schematische Darstellung einer Ausgabe an einer Ausgabeeinrichtung, und
- Figur 5: eine erläuternde Darstellung einer Tretunterstützung mittels eines Elektromotors.

### Bevorzugte Ausführungsformen der Erfindung

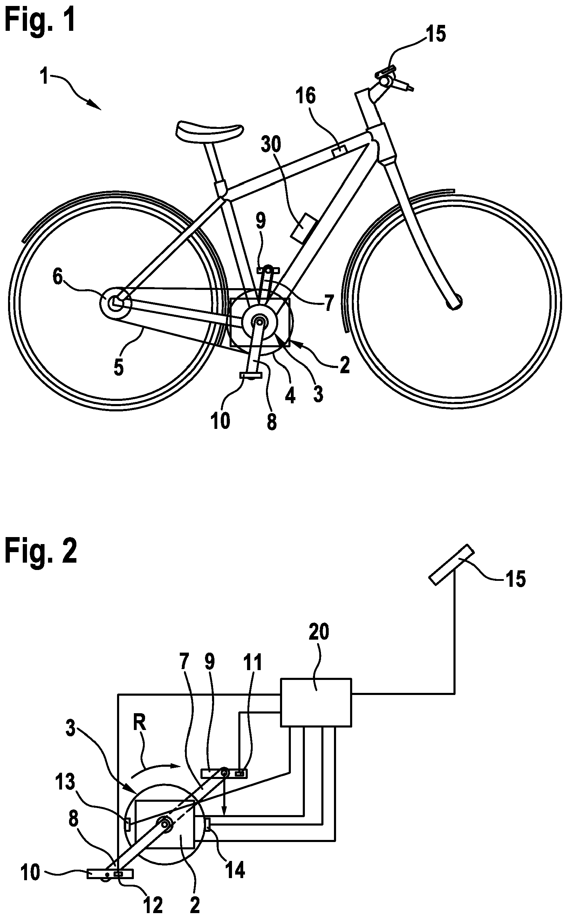

Nachfolgend wird unter Bezugnahme auf die Figuren 1 bis 5 ein Elektrofahrrad 1 gemäß einem bevorzugten Ausführungsbeispiel der Erfindung im Detail beschrieben.

Das Elektrofahrrad 1 umfasst einen Elektromotor 2, der in diesem Ausführungsbeispiel an einem Kurbeltrieb 3 angeordnet ist. Hierbei handelt es sich um ein Elektrofahrrad mit einem sogenannten "Centermotor". Der Kurbeltrieb 3 weist ein Kettenblatt 4 auf, welches über eine Kette 5 mit einem Hinterradritzel 6 verbunden ist.

Der Kurbeltrieb 3 umfasst eine erste Kurbel 7, an welcher ein erstes Pedal 9 angeordnet ist, und eine zweite Kurbel 8, an welcher ein zweites Pedal 10 angeordnet ist. Wie insbesondere aus Figur 2 ersichtlich ist, ist dabei am ersten Pedal 9 ein erster Kraftsensor 11 und am zweiten Pedal 10 ein zweiter Kraftsensor 12 vorgesehen. Ferner umfasst der Kurbeltrieb 3 einen ersten Kurbelsensor 13 und einen zweiten Kurbelsensor 14, welche in diesem Ausführungsbeispiel zwischen dem Kettenblatt und einem Rahmen des Elektrofahrrads angeordnet sind und um 180° am Umfang versetzt sind. Es sei angemerkt, dass es auch möglich ist, die Kurbelpositionen nur mit einem Kurbelsensor zu erfassen.

Das Elektrofahrrad 1 umfasst ferner eine Batterie 30 sowie eine Steuereinheit 20. Die Steuereinheit 20 ist dabei mit den beiden Kraftsensoren 11, 12 und den beiden Kurbelsensoren 13, 14 sowie einer Ausgabeeinrichtung 15 verbunden. Ferner ist die Steuereinheit 20 mit dem Elektromotor 2 und der Batterie 30 verbunden. Die Ausgabeeinrichtung 15 ist beispielsweise am Lenker angeordnet.

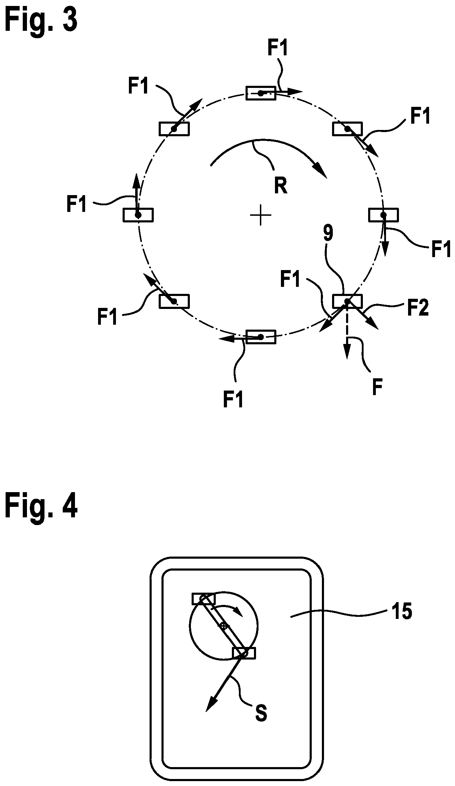

Die Steuereinheit 20 ist eingerichtet, um, basierend auf den erfassten Werten der Kraftsensoren 11, 12 und der Kurbelsensoren 13, 14, Rückschlüsse auf eine Tritttechnik des Fahrers zu ziehen. Hierbei vergleicht die Steuereinheit 20 die auf die Pedale und die Kurbeln einwirkende Kraft mit einer als "runder Tritt" bezeichneten optimalen, tangentialen Krafteinleitung auf den Kurbeltrieb 3. Hierbei wäre beim optimalen runden Tritt eine Krafteinleitung derart, dass an jeder Stellung der Kurbel entlang der 360°-Drehung des Kettenblatts an jedem Punkt eine tangentiale Krafteinleitung wirken würde. In Figur 3 ist für verschiedene Stellungen des Kurbeltriebs jeweils die tangentiale Kraft F1 eingezeichnet. Der Pfeil R bezeichnet dabei eine Rotationsrichtung. In Fig. 3 ist ferner bei einer Pedalstellung von ca. 120°, ausgehend von einer Vertikalen, neben der tangentialen Kraft F1 auch eine radiale Kraft F2 dargestellt. Weiterhin ist die tatsächlich durch den Fahrer eingebrachte Tretkraft F durch den gestrichelten Pfeil eingezeichnet, wodurch die Abweichung der tatsächlich vorhandenen Tretkraft F von der optimalen, tangentialen Kraft F1 verdeutlicht wird.

Wie somit aus Fig. 3 ersichtlich ist, besteht häufig eine deutliche Diskrepanz zwischen der optimalen tangentialen Kraft F1 und der durch den Fahrer tatsächlich aufgebrachten Tretkraft F. Dies wird durch die Steuereinheit 20 erkannt und in entsprechender Weise wird, wie in Fig. 4 dargestellt, eine Anzeige an der Ausgabeeinrichtung 15 ausgegeben. Hierbei ist schematisch der Kurbeltrieb 3 dargestellt sowie ein Pfeil S, welcher die an der Kurbelstellung von ca. 120° gezeigte Trittrichtung verdeutlicht, in welche die Tretkraft durch den Fahrer in dieser Kurbelstellung eingebracht werden soll. Alternativ oder zusätzlich kann auch der aufgebrachte Kraftvektor und/oder die Veränderung des Kraftvektors aufgrund des Motoreingriffs dargestellt werden.

Neben der Möglichkeit der Anzeige einer Hilfestellung für den Fahrer zum Erreichen eines optimalen runden Tritts ist es bei dem in den Figuren gezeigten bevorzugten Elektrofahrrad 1 auch möglich, dass eine zusätzliche Unterstützung durch den Elektromotor 2 erfolgt. Hierbei ist die Steuereinheit 20 derart eingerichtet, dass der Elektromotor 2 derart angesteuert werden kann, dass eine Unterstützung so eingebracht wird, dass sich eine Tretkraft am Kurbeltrieb möglichst dem optimalen runden Tritt annähert.

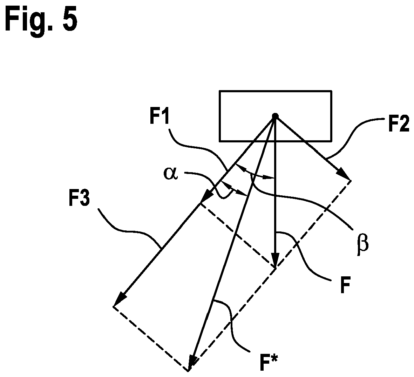

Wie in Figur 5 gezeigt, steuert die Steuereinheit 20 den Elektromotor 2 dabei derart an, dass nach Erkennen einer Abweichung der tatsächlichen Tretkraft F von der tangentialen Kraft F1 der Elektromotor 2 betrieben wird, so dass eine zusätzliche tangentiale Kraft F3 auf den Kurbeltrieb ausgeübt wird. Hierdurch verschiebt sich die Krafteinbringung am Pedal auf den Pfeil F*, wie aus Figur 5 ersichtlich ist. Hierbei nähert sich die Summe aus der durch den Fahrer aufgebrachten Tretkraft F und der durch den Elektromotor beigesteuerte Kraft F3 der tangentialen Kraft F1 an, was durch den kleineren Winkel a zwischen der tangentialen Kraft F1 und der resultierenden Kraft F* im Vergleich mit dem Winkel β zwischen der tangentialen Kraft F1 und der tatsächlichen durch den Fahrer aufgebrachten Tretkraft F deutlich wird.

Auch ist es möglich, dass statt des unterstützenden Motoreingriffs der Motor auch bremsend einwirkt, um sich dem optimalen Tritt anzunähern. Hier kann z.B. ein Fahrer auch die Art der Trainingsmethode, d.h., belohnend (unterstützend) oder bestrafend (bremsend), auswählen.

Ferner weist das Elektrofahrrad 1 noch einen Neigungssensor 16 auf, welcher eine Seitenneigung des Fahrrads erfasst. Basierend auf der erfassten Seitenneigung kann die Steuereinheit 20 dann an der Ausgabeeinrichtung 15 einen Warnhinweis ausgeben, dass eine gefährliche Seitenneigung erreicht ist und der Fahrer das Fahrrad aufrechter fahren sollte. Gegebenenfalls kann die Steuereinheit 20 auch den Elektromotor 2 derart betreiben, dass eine Stellung der Kurbeln 7, 8 verändert wird, so dass vermieden wird, dass aufgrund der Seitenneigung des Fahrrads ein Bodenkontakt eines Pedals auftritt.

Erfindungsgemäß können somit durch eine Kraftmessung einer durch den Fahrer aufgebrachten Tretkraft sowie einer Stellung der Kurbeln 7, 8 Rückschlüsse auf eine Tritttechnik des Fahrers getroffen werden. Anhand der erfassten Tritttechnik wird ein Abweichen zu einem optimalen runden Tritt bestimmt und dem Fahrer an der Ausgabeeinrichtung 15 eine optische Hilfestellung gegeben. Gegebenenfalls könnte auch eine akustische Hilfestellung gegeben werden, beispielsweise durch einen Warnton, wenn eine Abweichung zwischen einer tatsächlichen Tretkraft F und einer tangentialen Kraft F1 an dieser Position der Kurbel zu groß ist bzw. einen vorbestimmten Schwellenwert überschreitet.

Die verschiedenen Sensoren am Elektrofahrrad 1 können dabei durch die vorhandene Batterie 30 versorgt werden oder alternativ sind separate Batterien für die einzelnen Sensoren, beispielsweise in den Pedalen integrierte Batterien, vorgesehen. Die Kurbelsensoren 13, 14, sind vorzugsweise Hall-Sensoren. Die Ausgabeeinrichtung 15 kann eine fest installierte Ausgabeeinrichtung sein oder alternativ auch beispielsweise ein Smartphone oder dergleichen. Da in Smartphones häufig auch schon Neigungssensoren eingebaut sind, können bei Verwendung eines Smartphones als Ausgabeeinrichtung auch die im Smartphone vorhandenen Neigungssensoren verwendet werden, um eine Neigung des Fahrrads zu erfassen.

## Patentansprüche

1. Fahrrad, umfassend
- einen Kurbeltrieb (3), welcher eine erste Kurbel (7) mit einem ersten Pedal (9) und eine zweite Kurbel (8) mit einem zweiten Pedal (10) aufweist,
- wenigstens einen Kraftsensor (11) zur Bestimmung einer Tretkraft eines Fahrers des Fahrrads,
- wenigstens einen Kurbelsensor (13) zur Bestimmung einer Stellung der Kurbeln,
- eine Ausgabeeinrichtung (15) zum Ausgeben einer Information an den Fahrer
- eine Steuereinheit (20), welche mit dem Kraftsensor (11), dem Kurbelsensor (13) und der Ausgabeeinrichtung (15) verbunden ist,
- wobei die Steuereinheit (20) eingerichtet ist, mittels der Ausgabeeinrichtung (15), basierend auf den erfassten Werten des Kraftsensors (11) und des Kurbelsensors (13), eine Hilfestellung zur Verbesserung eines Tretvorgangs des Fahrers auszugeben, um sich einem optimalen runden Tritt anzunähern, und **gekennzeichnet durch**
- einen Elektromotor (2), welcher mit der Steuereinheit (20) verbunden ist und welcher eingerichtet ist, einen Drehmoment auf den Kurbeltrieb (3) abzugeben, wobei die Steuereinheit (20) den Elektromotor (2) derart ansteuert, dass der Elektromotor (2) während eines Tretvorgangs eines Fahrers ein zusätzliches Drehmoment auf den Kurbeltrieb (3) abgibt, um am Kurbeltrieb einen optimalen runden Tritt zu erreichen oder sich einem optimalen runden Tritt anzunähern

2. Fahrrad nach Anspruch 1, **gekennzeichnet durch** einen ersten Kraftsensor (11) am ersten Pedal (9) und einen zweiten Kraftsensor (12) am zweiten Pedal (10).

3. Fahrrad nach einem der vorhergehenden Ansprüche, **gekennzeichnet durch** einen ersten Kurbelsensor (13) und einen zweiten Kurbelsensor (14).

4. Fahrrad nach einem der vorhergehenden Ansprüche, **dadurch gekennzeichnet, dass** der Elektromotor (2) am Kurbeltrieb (3) angeordnet ist.

5. Fahrrad nach einem der vorhergehenden Ansprüche, ferner umfassend einen Neigungssensor (16), um eine Seitenneigung des Fahrrads zu erfassen, wobei der Neigungssensor mit der Steuereinheit (20) verbunden ist und die Steuereinheit bei Überschreiten einer vorbestimmten Seitenneigung eine Warnung an den Fahrer ausgibt.

6. Fahrrad nach Anspruch 5, **dadurch gekennzeichnet, dass** die Steuereinheit (20) eingerichtet ist, eine Stellung der Kurbeln (7, 8) des Kurbeltriebs mittels des Elektromotors (2) zu ändern, um bei einer Seitenneigung ein Aufsetzen des Pedals am Boden zu verhindern.

7. Verfahren zur Verbesserung einer Tritttechnik eines Fahrers eines Fahrrads, umfassend die Schritte:
- Bestimmen einer Tretkraft des Fahrers auf einen Kurbeltrieb (3),
- Bestimmen einer Kurbelstellung einer ersten Kurbel (7) und/oder einer zweiten Kurbel (8) des Kurbeltriebs und
- Ausgeben einer Hilfestellung zur Änderung einer Tretkraft in Abhängigkeit einer Kurbelstellung, um die Tritttechnik des Fahrers an einen optimalen runden Tritt anzunähern oder einen optimalen runden Tritt zu erreichen,
- wobei der Kurbeltrieb (3) mit einem Elektromotor (2) verbunden ist und der Elektromotor (2) einen Drehmoment zusätzlich zu dem vom Fahrer aufgebrachten Drehmoment auf den Kurbeltrieb (3) ausübt, um sich dem optimalen runden Tritt anzunähern oder den optimalen runden Tritt zu erreichen.

8. Verfahren nach Anspruch 7, ferner umfassend den Schritt des Erfassens einer Seitenneigung des Fahrrads und Ausgebens einer Warnung, wenn eine vorbestimmte Seitenneigung überschritten wird.

9. Verfahren nach Anspruch 7 oder 8, wobei das Verstellen einer Kurbelstellung des Kurbeltriebs (3) mittels des Elektromotors (2) derart erfolgt, dass trotz Seitenneigung des Fahrrads kein Aufsetzen eines Pedals auf einem Boden erfolgt.

## Claims

1. Bicycle comprising
- a crank drive (3) which has a first crank (7) with a first pedal (9) and a second crank (8) with a second pedal (10),
- at least one force sensor (11) for determining a pedalling force of a rider of the bicycle,
- at least one crank sensor (13) for determining a position of the cranks,
- an output device (15) for outputting information to the driver,
- a control unit (20) which is connected to the force sensor (11), to the crank sensor (13) and to the output device (15),
- wherein the control device (20) is configured to output assistance based on the detected values of the force sensor (11) and of the crank sensor (13) in order to improve a pedalling process of the rider, in order to approach an optimum round pedalling action, and
**characterized by**
- an electric motor (2) which is connected to the control unit (20) and which is configured to output a torque to the crank drive (11), wherein the control unit (20) actuates the electric motor (2) in such a way that during a pedalling process of a rider the electric motor (2) outputs an additional torque to the crank drive (3) in order to achieve an optimum round pedalling action or approximate to an optimum round pedalling action at the crank drive.

2. Bicycle according to Claim 1, **characterized by** a first force sensor (11) on the first pedal (9) and a second force sensor (12) on the second pedal (10).

3. Bicycle according to one of the preceding claims, **characterized by** a first crank sensor (13) and a second crank sensor (14).

4. Bicycle according to one of the preceding claims, **characterized in that** the electric motor (2) is arranged on the crank drive (3).

5. Bicycle according to one of the preceding claims, also comprising an inclination sensor (16) for detecting a lateral inclination of the bicycle, wherein the inclination sensor is connected to the control unit (20), and the control unit outputs a warning to the driver when a predetermined lateral inclination is exceeded.

6. Bicycle according to Claim 5, **characterized in that** the control unit (20) is configured to change a position of the cranks (7, 8) of the crank drive by means of the electric motor (2), in order to prevent the pedal from touching the ground in the case of a lateral inclination.

7. Method for improving a pedalling technique of a rider of a bicycle, comprising the steps:
- determining a pedalling force of the rider on a crank drive (3),
- determining a crank position of a first crank (7) and/or of a second crank (8) of the crank drive, and
- outputting assistance for changing the pedalling force as a function of a crank position, in order to approximate the pedalling technique of a driver to an optimum round pedalling action or to achieve a round pedalling action.
- wherein the crank drive (3) is connected to an electric motor (2), and the electric motor (2) exerts a torque on the crank drive (3) in addition to the torque applied by the driver, in order to approximate to the optimum round pedalling action or to reach the optimum round pedalling action.

8. Method according to Claim 7, also comprising the step of detecting a lateral inclination of the bicycle and outputting a warning if a predetermined lateral inclination is exceeded.

9. Method according to Claim 7 or 8, wherein the adjustment of a crank position of the crank drive (3) is carried out by means of the electric motor (2) in such a way that despite the lateral inclination of the bicycle a pedal does not touch the ground.

## Revendications

1. Bicyclette, comprenant
- un pédalier (3), qui comporte une première manivelle (7) munie d'une première pédale (9) et une deuxième manivelle (8) munie d'une deuxième pédale (10),
- au moins un capteur de force (11) destiné à déterminer une force de pédalage d'un conducteur de la bicyclette,
- au moins un capteur de manivelle (13) destiné à déterminer une position des manivelles,
- un dispositif de sortie (15) destiné à fournir en sortie une information au conducteur,
- une unité de commande (20), qui est reliée au capteur de force (11), au capteur de manivelle (13) et au dispositif de sortie (15),
- dans lequel l'unité de commande (20) est conçue pour délivrer une assistance destinée à améliorer un processus de pédalage du conducteur au moyen du dispositif de sortie (15), sur la base des valeurs détectées par le capteur de force (11) et le capteur de manivelle (13), afin de se rapprocher d'un pédalage circulaire optimal, et
**caractérisé par**
- un moteur électrique (2), qui est relié à l'unité de commande (20) et est conçu pour appliquer un couple de rotation au pédalier (3), dans lequel l'unité de commande (20) commande le moteur électrique (2) de manière à ce que le moteur électrique (2) applique un couple de rotation supplémentaire au pédalier (3) pendant un processus de pédalage d'un conducteur, afin d'atteindre un pédalage circulaire optimal au niveau du pédalier ou de se rapprocher d'un pédalage circulaire optimal.

2. Bicyclette selon la revendication 1, **caractérisée par** un premier capteur de force (11) sur la première pédale (9) et par un deuxième capteur de force (12) sur la deuxième pédale (10).

3. Bicyclette selon l'une quelconque des revendications précédentes, **caractérisée par** un premier capteur de manivelle (13) et par un deuxième capteur de manivelle (14).

4. Bicyclette selon l'une quelconque des revendications précédentes, **caractérisée en ce que** le moteur électrique (2) est disposé sur le pédalier (3).

5. Bicyclette selon l'une quelconque des revendications précédentes, comprenant en outre un capteur d'inclinaison (16) permettant de détecter une inclinaison latérale de la bicyclette, dans lequel le capteur d'inclinaison est relié à l'unité de commande (20) et l'unité de commande délivre une alarme au conducteur lorsqu'une inclinaison latérale prédéterminée est dépassée.

6. Bicyclette selon la revendication 5, **caractérisée en ce que** l'unité de commande (20) est conçue pour modifier une position des manivelles (7, 8) du pédalier au moyen du moteur électrique (2) afin d'empêcher que la pédale vienne au contact du sol lors d'une inclinaison latérale.

7. Procédé d'amélioration d'une technique de pédalage d'un conducteur d'une bicyclette, comprenant les étapes consistant à :
- déterminer une force de pédalage du conducteur sur un pédalier (3),
- déterminer une position de manivelle d'une première manivelle (7) et/ou d'une deuxième manivelle (8) du pédalier, et
- délivrer une assistance destinée à modifier une force de pédalage en fonction d'une position de manivelle afin que la technique de pédalage du conducteur se rapproche d'un pédalage circulaire optimal ou afin d'atteindre un pédalage circulaire optimal,
- dans lequel le pédalier (3) est relié à un moteur électrique (2) et le moteur électrique (2) exerce un couple de rotation s'ajoutant au couple de rotation appliqué au pédalier (3) par le conducteur, afin de se rapprocher d'un pédalage circulaire optimal ou d'atteindre le pédalage circulaire optimal.

8. Procédé selon la revendication 7, comprenant en outre l'étape consistant à détecter une inclinaison latérale de la bicyclette et à délivrer une alarme lorsqu'une inclinaison latérale prédéterminée est dépassée.

9. Procédé selon la revendication 7 ou 8, dans lequel le réglage d'une position de manivelle du pédalier (3) est effectuée au moyen du moteur électrique (2) de manière à ce qu'il ne se produise aucun contact entre une pédale et le sol malgré l'inclinaison latérale de la bicyclette.
